# EUROPEAN PATENT APPLICATION

(11) **EP 2 006 934 A2**
(43) Date of publication of application: **24.12.2008**
(21) Application number: 06722075.6
(22) Date of filing: 20.03.2006
(51) Int. Cl.: H01M 2/02, H01M 10/38

(54) **A SOFT PACKAGE LITHIUM ION POWER BATTERY MODULE**

(71) Applicant: Citic Guoan Mengguli New Energy Technology Co., Ltd., Changping District Beijing 102200 (CN)
(72) Inventor: YUE, Zai, Beijing 102200 (CN); XU, Hua, Beijing 102200 (CN); WU, Ningning, Beijing 102200 (CN); LEI, Xiangli, Beijing 102200 (CN); QI, Lu, Beijing 102200 (CN)
(74) Representative: Laufhütte, Dieter
(86) International application number: PCT/CN2006/000423
(87) International publication number: WO 2007/107036

(57) **Abstract**

A soft package lithium ion power battery module includes: a battery case, which comprises two face-to-face side walls for providing electrode connection terminal; plurity soft package lithium ion power batteries assembled in the case and each battery comprising posotive and negative electrode tab; connectors, which is used for the electrical connection between the said positive and negative electrode tabs alternatively to connect the battery in series or in parallel for forming battery group and then forming the positive and negative pole of the battery group; two positive terminals and two negative terminals are provided on the two face-to-face side walls of the case and exposed to the outside of the case; wherein when the said plurity battery modules are connected in series or in parallel, the said terminals on the side walls are setting in such way that the two ter- minals on the side wall of the battery module are facing to the two terminals on the side walls of the next battery module respectively.

## Description

### Technical Field

This invention relates to a power battery, and particularly to a soft package lithium ion power battery.

### Background Art

Based on the requirements of voltage and power of electrical equipment, most of soft package lithium ion power batteries are used at present by connecting the individual battery to each other in series and parallel randomly. There has not been a convenient and reasonable connecting combination mode. Except that it is very easy to damage the native delicate batteries mechanically, the method of combining naked individual soft package batteries randomly also results in over length wires, poor contact and excessively large contact resistance which further cause safety problems due to complicated connections and non-normative operations.

### Summary of the Invention

The object of the present invention is to provide a soft package lithium ion power battery module in order to overcome the shortcomings of the prior art.

In order to achieve the above object, the invention provides a soft package lithium ion power battery module, comprising:
a battery case including two opposite sidewalls for setting pole connection terminals;
a plurality of soft package lithium ion power batteries assembled in said battery case, each battery having a positive electrode tab and a negative electrode tab;
a connector for selectively electrically connecting said positive and negative electrode tabs of said plurality of batteries so as to connect said plurality of batteries in series or parallel for forming a battery group and then forming positive and negative poles of said battery group;
two positive pole connection terminals being electrically connected to said positive pole of said battery group, and face-to-face set on said two opposite sidewalls of said battery case respectively, and exposing to the external of said battery case;
two negative pole connection terminals being electrically connected to said negative pole of said battery group, and face-to-face set on said two opposite sidewalls of said battery case respectively, and exposing to the external of said battery case;
wherein the placement of said connection terminals set on said sidewalls is like that: when a plurality of said battery modules are connected in series or in parallel, two connection terminals on the butted sidewall of said battery module face to two connection terminals on the butted sidewall of the adjacent battery module respectively.

This invention has the following beneficial effects:
1) In this invention, a certain number of soft package lithium ion power batteries are set in a case to form a module so as to protect the soft package batteries from being mechanically damaged;
2) In this invention, the standard battery modules of different specifications can be constructed by appropriately selecting the electrical connection manner(in series or parallel) between batteries in the module and the number of batteries;
3) In this invention, a plurality of battery modules can be simply and conveniently fixed to each other in series or parallel by appropriately disposing connection terminals of the battery module; further, the connection manner and number of battery modules can be appropriately selected based upon the requirements of voltage and power of the electrical equipment;
4) In the preferred embodiments of this invention, electrode tabs are electrically connected with plate-shaped connectors so as to improve contact conditions effectively and reduce contact resistance;
5) The soft package lithium ion power battery module of this invention features in simplicity and normalization, thus ensuring safe and reasonable utilization of the battery and giving full play to the performance of the battery.

### Brief Description of the Drawings

Fig. 1 is a schematic diagram of a soft package lithium ion power battery;
Fig. 2 is a schematic diagram of the structure of the battery module of this invention, which schematically shows two battery modules, each comprising a plurality of batteries shown in Fig.1;
Fig.3 is a sectional view of one battery module shown in Fig.2;
Fig. **4(a)** schematically shows the connection in parallel between two battery modules of this invention;
Fig. 4(b) schematically shows the connection in series between two battery modules of this invention;
Fig. 5(a) schematically shows the connection in parallel between the batteries which are in a single battery module;
Fig. 5(b) schematically shows the connection in series between the batteries which are in a single battery module.

### Embodiments of Carrying Out the Invention

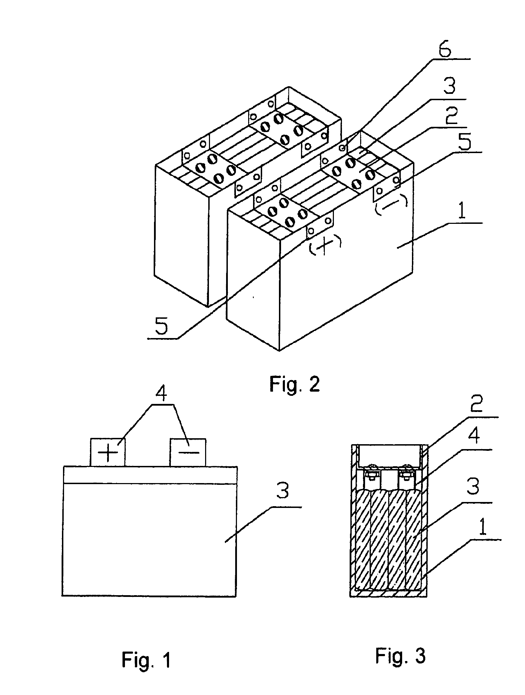

Fig.1 shows an embodiment of a soft package lithium ion power battery 3 used in this invention. As shown in Fig.2 and Fig.3, in one embodiment, the battery 3 is flat-shaped with a certain thickness and two electrode tabs 4, i.e., positive electrode tab and negative electrode tab are provided on the top of the battery.

Referring to the battery module shown in Figs. 2 and 3 more specifically, each battery module comprises a battery case 1 made from insulating material, for example, the battery case 1 is formed by injection molding of flame retardant ABS plastic. The battery case 1 is a cube with a top opening for easily accommodating a battery group. Optionally, the battery case 1 may also include a cover (not shown.) for covering its opening. In one embodiment, the battery group is formed by combining a plurality of batteries 3 (there are four batteries 3 in Figs 2 and 3) compactly along the thickness direction thereof. The size of the battery case 1 should match to that of the battery group, so that the battery group can be placed in battery case 1 appropriately. The bottom surface within the battery case 1 and the bottom surface of the battery group may be connected with an adhesive.

Four openings 5 are located on two opposite sidewalls of the battery case 1, each sidewall having two openings 5 for accommodating or imbedding the connection terminals of the battery module, which are exposed to external of the battery case 1. The connection terminal can be a conductive connection board, which is set in the opening 5 and parallel to the sidewall.

As shown in Fig.2, each battery module comprises two positive pole connection terminals and two negative pole connection terminals, with a positive pole connection terminal identified with a symbol (+) and a negative pole connection terminal identified with a symbol (-) provided in the two openings 5 on the front sidewall of the battery case 1 respectively. Likewise, a positive pole connection terminal and a negative pole connection terminal are also provided on the rear sidewall of the battery case 1. Moreover, the two positive pole connection terminals are face-to-face and both electrically connected to a positive pole of the battery group, while the two negative pole connection terminals are also face-to-face and both electrically connected to a negative pole of the battery group.

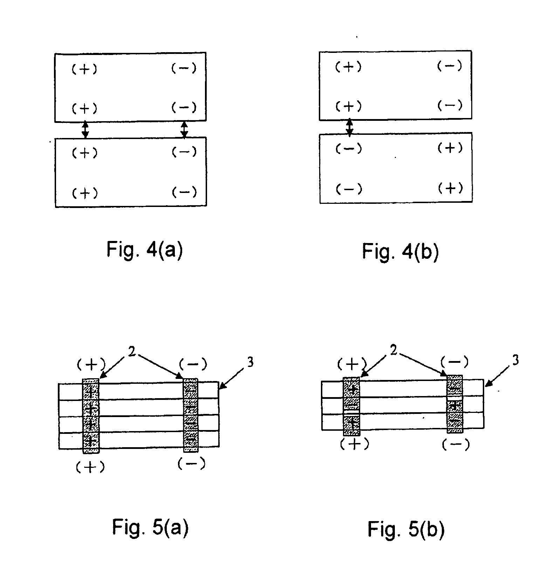

The placement of four connection terminals of the battery module is clearer in Figs. 4(a) and 4(b), wherein each of the drawings shows two battery modules, in which the positive pole connection terminal and negative pole connection terminal are identified with the symbols (+) and (-) respectively, and double arrows denote electrical connection. For each of the battery modules, two positive pole connection terminals are face-to-face and set on two opposite sidewalls of the battery case respectively, and two negative pole connection terminals are also face-to-face and set on two opposite sidewalls of the battery case respectively. As shown in Fig.4(a), when two battery modules are connected in parallel, they are placed face-to-face in the same manner. On the two butted sidewalls to be connected, the two positive pole connection terminals being face-to-face are electrically connected, similarly, the two negative pole connection terminals being face-to-face are electrically connected. As shown in Fig.4(b), when two battery modules are connected in series, they are placed face-to-face with the directions thereof turning 180 degrees relative to each other. Thus, the positive pole connection terminals and the negative pole connection terminals on the two butted sidewalls to be connected are face-to-face, and then one of the positive pole connection terminals is electrically connected to the negative pole connection terminal to which it is facing. Although Figs. 4(a) and 4(b) only show two battery modules, the skills in the art may readily appreciate that the above connections in series or parallel can be carried out between more battery modules.

In each battery module, a connector 2 is used for electrically connecting a plurality of batteries 3, as shown in Fig.2. The connector 2 selectively electrically connects the positive and negative electrode tabs 4 of the plurality of batteries 3 within the module so as to connect the plurality of batteries 3 in series or in parallel for forming a battery group and forming a positive pole and a negative pole of the battery group.

Figs. 5(a) and 5(b) show arrangement manners of a plurality of batteries 3 and electrode tabs 4 thereof in the single battery module, wherein the symbols (+) and (-) schematically denote positive and negative electrode tabs of the battery 3 in the two drawings. As shown in Figs. 5(a) and 5(b), the electrode tabs 4 of the plurality of batteries 3 are arranged in two columns in the battery module, wherein in the case of parallel connection as shown in Fig.5(a), the positive electrode tabs of the plurality of batteries 3 are arranged in a column, while the negative electrode tabs thereof are arranged in the other column; and in the case of series connection as shown in Fig.5(b), the positive and negative electrode tabs of the plurality of batteries 3 are alternately arranged in two columns.

As shown in Fig.2, Figs. 5(a) and 5(b), the connectors 2 comprise two long-type connector plates with each at least having a conductive part. The two long-type connector plates are set at two columns of electrode tabs respectively and extend along the arrangement direction of the electrode tabs. The long-type connector plates are selectively electrically connected to the electrode tabs in the same column of them by the conductive parts thereof to form a positive and a negative pole of the battery group. The connector plate 2 can be mechanically connected to the electrode tabs 4 in the same column of the connector, so that the connector plate can be fixed on the battery group.

The selectively electrical connection between connector plates 2 and electrode tabs 4 of the batteries 3 will be further described by reference to Figs. 5(a) and 5(b), in which the shadow regions show the conductive parts of connector plates 2. In the case of parallel connection shown in Fig.5(a), all the positive electrode tabs of batteries are electrically connected to one connector plate 2, while all the negative electrode tabs of batteries are electrically connected to another connector plate 2. As a result, the two connector plates 2 may form the positive and the negative pole of the battery group respectively, thus, the two connector plates 2 can be electrically connect to two nearby positive pole connection terminals (+) and two nearby negative pole connection terminals (-) respectively, which is feasible for any number of batteries, and in this case, the connector plates 2 may be integrally conductive.

In the case of series connection shown in Fig.5(b), each connector plate 2 has a conductive part (in shadow region) by which the connector plate 2 can be electrically connected to the electrode tabs in the same column of it so as to form a series connection. It will be appreciated that in the case of series connection, when the number of the batteries in series battery group is odd, the positive and negative poles of the battery group are located at two connector plates respectively, thus, the two connector plates 2 can be electrically connected to two nearby positive pole connection terminals (+) and two nearby negative pole connection terminals (-) respectively, as shown in Fig. 5(b).

When the battery group in the battery module is the parallel battery group shown in Figs. 5(a) or the serial battery group comprising odd number of batteries as shown in Figs. 5(b,), the connector plate 2 and two adjacent connection boards will form an integral U-shaped plate, as shown in Fig.2, wherein the connector plate 2 is the bottom of U-shaped plate, and the two connection boards are the upward curved portions of the U-shaped plate respectively.

When the batteries of even number are connected in series, it is readily appreciated that the positive and negative poles of the battery group can be presented on the same connector plate 2, so additional conductive connectors are desired for connecting the positive pole of the battery group to two positive pole connection terminals (+) and connecting the negative pole of the battery group to two negative pole connection terminals (-) respectively. Preferably, the additional conductive connectors are conductive plates or thick wires of low resistance.

In order to connect the plurality of modules in parallel or in series as shown in Figs. 4(a) or 4(b), it is also necessary to use a module connecting assembly to connect the connection terminals of the two adjacent battery modules electrically and/or mechanically after the formation of the battery modules of this invention. When parallel connection is performed between the modules as shown in Fig. 4(a), on the opposite sidewalls of the two adjacent battery modules, a pair of positive pole connection terminals are electrically connected and mechanically fixed at the same time by the module connecting assembly, and a pair of negative pole connection terminals are electrically connected and mechanically fixed at the same time by another module connecting assembly. When series connection is performed between the modules, on the opposite sidewalls of the two adjacent battery modules, only one of the positive pole connection terminals needs to be electrically connected to the negative pole connection terminal to which it is facing. Hence, these two connection terminals can be electrically connected to each other and mechanically fixed by the module connecting assembly whereas the other of the positive pole connection terminals and the negative pole connection terminal to which it is facing on the opposite sidewalls need to be fixed mechanically only. At this time, an insulating sheet can be set between the two connection terminals. In one embodiment, the module connecting assembly comprises connecting holes 6 provided in the connection terminals, and bolts (not shown) for being appropriately accommodated in the connecting holes.

Two applicable embodiments of battery modules of this invention will be described as follows.

### Embodiment 1:

Four batteries 3 of 100 Ah, 4V with good uniformity of various parameters are stacked in regular to form a battery group. The positive electrode tabs 4 and negative electrode tabs 4 of the batteries 3 are connected in parallel by two U-shaped connector plates 2 respectively. Then the batteries are placed in a battery case 1, thus forming a battery module of 400Ah, 4V (actually 3.7V). N modules of 400Ah, 4V are connected in parallel by the bolts through the connecting holes 6 in the connection boards of the sidewalls so as to obtain a 4V lithium ion battery power supply having a capacity of n*400Ah. If such n modules are connected in series by the bolts, a n*4V lithium ion battery power supply having a capacity of 400Ah will be obtained. The battery case 1 injection molded with flame retardant ABS plastic is of the size just to accommodate the four selected 100Ah soft package lithium ion batteries 3. The length of the connector plate 2 is the same as the thickness of the battery case 1, and the width of the connector plate 2 equals to that of the electrode tabs 4 of the batteries. Both ends of the connector plate 2 are bent by 90° toward the same direction with a hem height of 20mm so as to form a connection board, on which is provided two connecting holes 6. The connector plates 2 are made from a copper sheet with a thickness of 1mm.

### Embodiment 2:

Three soft package lithium ion batteries 3 of 100Ah, 4V are stacked in regular and connected in series. The positive electrode tabs 4 and negative electrode tabs 4 of the series batteries are connected to one respective connector plate 2 respectively. Then the batteries 3 are placed in a battery case 1 to form a lithium ion battery module of 12V, 100Ah. If such n modules are connected in series with bolts, a lithium ion battery power supply of 12V*n, 100Ah will be obtained.

## Claims

1. A soft package lithium ion power battery module, **characterized in that** said battery module comprises:
a battery case including two opposite sidewalls for setting pole connection terminals;
a plurality of soft package lithium ion power batteries assembled in said battery case, each battery having a positive electrode tab and a negative electrode tab;
a connector for selectively electrically connecting said positive and negative electrode tabs of said plurality of batteries so as to connect said plurality of batteries in series or parallel for forming a battery group and then forming positive and negative poles of said battery group;
two positive pole connection terminals being electrically connected to said positive pole of said battery group, and face-to-face set on said two opposite sidewalls of said battery case respectively, and exposing to the external of said battery case;
two negative pole connection terminals being electrically connected to said negative pole of said battery group, and face-to-face set on said two opposite sidewalls of said battery case respectively, and exposing to the external of said battery case;
wherein the placement of said connection terminals set on said sidewalls is like that: when a plurality of said battery modules are connected in series or in parallel, two connection terminals on the butted sidewall of said battery module face to two connection terminals on the butted sidewall of the adjacent battery module respectively.

2. The soft package lithium ion power battery module of claim 1, **characterized in that** said electrode tabs of the plurality of batteries in said battery group are arranged in two columns, wherein when said plurality of batteries are connected in parallel, said positive electrode tabs of said plurality of batteries are arranged in one of the columns, and said negative electrode tabs thereof are arranged in the other column; when said plurality of batteries are connected in series, said positive and negative electrode tabs of said plurality of batteries are alternately arranged in said two columns.

3. The soft package lithium ion power battery module of claim 2, **characterized in that** said connector comprises two long-type connector plates with each at least having a conductive part, said two long-type connector plates being set on said electrode tabs in two columns respectively, and extending along the arrangement direction of said electrode tabs, and being selectively electrically connected to the electrode tabs which are in the same column as said long-type connector plate through said conductive parts thereof so as to form said positive and negative poles of said battery group.

4. The soft package lithium ion power battery module of claim 3, **characterized in that** said connector plates are mechanically connected with the electrode tabs which are in the same column as them.

5. The soft package lithium ion power battery module of claim 3, **characterized in that** said connection terminal can be a conductive connection board being set in an opening on said sidewall of said battery case and parallel to said sidewall.

6. The soft package lithium ion power battery module of claim 5, **characterized in that** said battery group can be a parallel battery group or a series battery group having odd number batteries.

7. The soft package lithium ion power battery module of claim 6, **characterized in that** two connection boards for forming said two positive pole connection terminals and a long-type connector plate are integrally formed, while two connection boards for forming said two negative pole connection terminals and another long-type connector plate are integrally formed.

8. The soft package lithium ion power battery module of claim 7, **characterized in that** said integrally formed connection boards and connector plate are U-shaped, wherein said connector plate is the bottom of said U, and said two connection boards are the upward curved portions of said U respectively.

9. The soft package lithium ion power battery module of claim 5, **characterized in that** said battery group is a series battery group having even number batteries.

10. The soft package lithium ion power battery module of claim 9, **characterized in that** said positive pole connection terminals and the positive pole of said battery group are electrically connected by additional conductive connectors, and said negative pole connection terminals and the negative pole of said battery group are electrically connected by additional conductive connectors.

11. The soft package lithium ion power battery module of claim 5, **characterized in that** further comprising a module connecting assembly for connecting the connection terminals of said battery module and of adjacent battery module electrically and/or mechanically.

12. The soft package lithium ion power battery module of claim 11, **characterized in that** said module connecting assembly comprises connecting holes provided in said connection terminals, and bolts for being adaptively accommodated in said connecting holes.

13. The soft package lithium ion power battery module of claim 1, **characterized in that** said battery case is made from insulating material.

14. The soft package lithium ion power battery module of claim 1, **characterized in that** said battery case is a cube with an openable end.

15. The soft package lithium ion power battery module of claim 1, **characterized in that** said battery is flat-shaped with a certain thickness, and said plurality of batteries are combined compactly along the thickness direction thereof so as to form said battery group.
